Europäisches Patentamt

European Patent Office

Office européen des brevets

(11) Veröffentlichungsnummer : **0 111 582**
**B1**

# (12) EUROPÄISCHE PATENTSCHRIFT

(45) Veröffentlichungstag der Patentschrift :
22.10.86

(21) Anmeldenummer : 82111771.0

(22) Anmeldetag : 18.12.82

(51) Int. Cl.⁴ : **H 04 B   9/00**

(54) Fehlerortungseinrichtung für eine Lichtwellenleiter-Kabelstrecke.

(43) Veröffentlichungstag der Anmeldung :
27.06.84 Patentblatt 84/26

(45) Bekanntmachung des Hinweises auf die Patenterteilung : 22.10.86 Patentblatt 86/43

(84) Benannte Vertragsstaaten :
CH DE GB LI NL

(56) Entgegenhaltungen :
DE-A- 3 042 815
DE-C- 2 554 718
PATENTS ABSTRACTS OF JAPAN, Band 5, Nr. 176 (E-
81) (848), 12. November 1981
PATENTS ABSTRACTS OF JAPAN, Band 4, Nr. 104,
(E-19)(586), 25. Juli 1980, Seite 155 E 19
PATENTS ABSTRACTS OF JAPAN, Band 5, Nr. 145,
(E-74)(817), 12. September 1981

(73) Patentinhaber : ANT Nachrichtentechnik GmbH
Gerberstrasse 33
D-7150 Backnang (DE)

(72) Erfinder : Rauth, Erich, Dipl.-Ing.
Falkenweg 18
D-7151 Auenwald 2 (DE)
Erfinder : Blume, Georg, Dipl.-Ing.
Auf dem Hagenbach 60
D-7150 Backnang (DE)

(74) Vertreter : Schickle, Gerhard, Dipl.-Ing. et al
ANT Nachrichtentechnik GmbH Patent- und Lizenzabteilung Gerberstrasse 33
D-7150 Backnang (DE)

## Beschreibung

Die vorliegende Erfindung betrifft eine Fehlerortungseinrichtung für eine Lichtwellenleiterkabelstrecke, wobei am Ende eines jeden auf Lichtdurchgang zu überprüfenden Kabelabschnitts eine Vorrichtung vorhanden ist, die ein von einem Sende-Empfangsgerät in einen ersten Lichtwellenleiter des Kabels eingespeistes Signal einer bestimmten dem jeweiligen Kabelabschnitt eindeutig zugeordneten Wellenlänge aus diesem Lichtwellenleiter auskoppelt und es in einen zweiten Lichtwellenleiter einkoppelt, der das Signal an das Sende-Empfangsgerät zurückleitet.

Eine derartige Fehlerortungseinrichtung ist aus den « Patents Abstracts of Japan », Band 4, Nr. 104, (E-19) (586), 25. Juli 1980, Seite 155 E 19, zusammenfassung der JP-A-55-64454, bekannt. Hierbei werden die in die Kabelstrecke eingefügten Zwischenverstärker ausgenutzt, um ein von einem Endgerät ausgesendetes Kontrollsignal aus einem ersten Lichtwellenleiter des zu testenden Kabelabschnitts auszukoppeln und es in einen zweiten Lichtwellenleiter wieder einzukoppeln, der das Kontrollsignal zum Endgerät zurückleitet. Wie in einem Zwischenverstärker üblich, werden die darin eingehenden Lichtsignale in elektrische Signale umgewandelt. Ein anschließendes elektrisches Filter filtert nur das elektrische Signal heraus, dessen Wellenlänge dem jeweiligen Kabelabschnitt für dessen Kontrolle zugeordnet ist. Dieses elektrische Kontrollsignal einer bestimmten Wellenlänge wird dann in ein optisches Signal zurückgewandelt und dieses in den zweiten Lichtwellenleiter eingekoppelt, um es dem Endgerät zuzuleiten. Jeder der die gesamte Kabelstrecke in mehrere Abschnitte unterteilenden Zwischenverstärker besitzt ein auf eine andere Wellenlänge abgestimmtes Bandpaßfilter. Da jedem durch die Zwischenverstärker abgegrenzten Kabelabschnitt eine eigene Kontrollsignalwellenlänge zugeordnet ist, kann genau geortet werden, in welchem Kabelabschnitt ein Fehler aufgetreten ist, indem das Endgerät nacheinander Kontrollsignale mit den verschiedenen Wellenlängen in das Kabel einspeist.

Der Fehlerortungsvorgang gemäß dem Stand der Technik läuft nicht ohne Zuführung elektrischer Energie ab, da in den Zwischenverstärkern eine opto-elektrische bzw. elektro-optische Umwandlung der Kontrollsignale vorgenommen wird.

Denselben Nachteil weist eine aus der DE-OS 30 42 815 bekannte Fehlerortungseinrichtung auf. Auch hier werden die Kontrollsignale in Zwischenverstärkern von einer Übertragungsrichtung zur anderen umgeleitet. Allerdings sind hier den einzelnen Kabelabschnitten keine spezifischen Wellenlängen der Kontrollsignale zugeordnet. Deshalb sind in den Zwischenverstärkern zusätzlich besondere Schaltungsmaßnahmen zu ergreifen, welche die Umleitung der Kontrollsignale in den jeweils gewünschten zu dem zu kontrollierenden Kabelabschnitt gehörenden Zwischenverstärker ausüben.

Aus den « Patents Abstracts of Japan », Band 5, Nr. 176, (E-81) (848), 12. Nov. 1981, zusammenfassung der JP-A-56-103550, geht ein optisches Multiplexübertragungssystem hervor mit mehreren auf einer Kabelstrekke verteilt angeordneten Datenstationen. Diese Datenstationen sind in der Lage, aus einem Lichtwellenleiter von mehreren Signalen verschiedener Wellenlängen ein Signal einer bestimmten Wellenlänge auszukoppeln und es in einen anderen Lichtwellenleiter einzukoppeln. Mit welchen Mitteln dies geschieht, geht aus der Literaturstelle nicht hervor.

Der Erfindung liegt nun die Aufgabe zugrunde, eine Fehlerortungseinrichtung der eingangs genannten Art anzugeben, die mit einfachen Mitteln und ohne elektrische Energie benötigenden schaltungstechnischen Aufwand eine rasche Fehlerortung auf einer Lichtwellenleiterkabelstrecke ermöglicht.

Diese Aufgabe wird erfindungsgemäß durch die kennzeichnenden Merkmale des Patentanspruchs 1 gelöst.

Zweckmäßige Ausführungen der Erfindung gehen aus den Unteransprüchen hervor.

Anhand von in der Zeichnung dargestellten Ausführungsbeispielen soll die Erfindung nachfolgend erläutert werden. Es zeigen :

Figur 1 eine Lichtwellenleiterkabelstrecke mit mehreren Fehlerortungseinrichtungen

Figur 2 eine Fehlerortungseinrichtung, deren Koppelmittel planparallele Platten sind und

Figur 3 eine Fehlerortungseinrichtung, deren Koppelmittel Lichtwellenleiterverzweigungen sind.

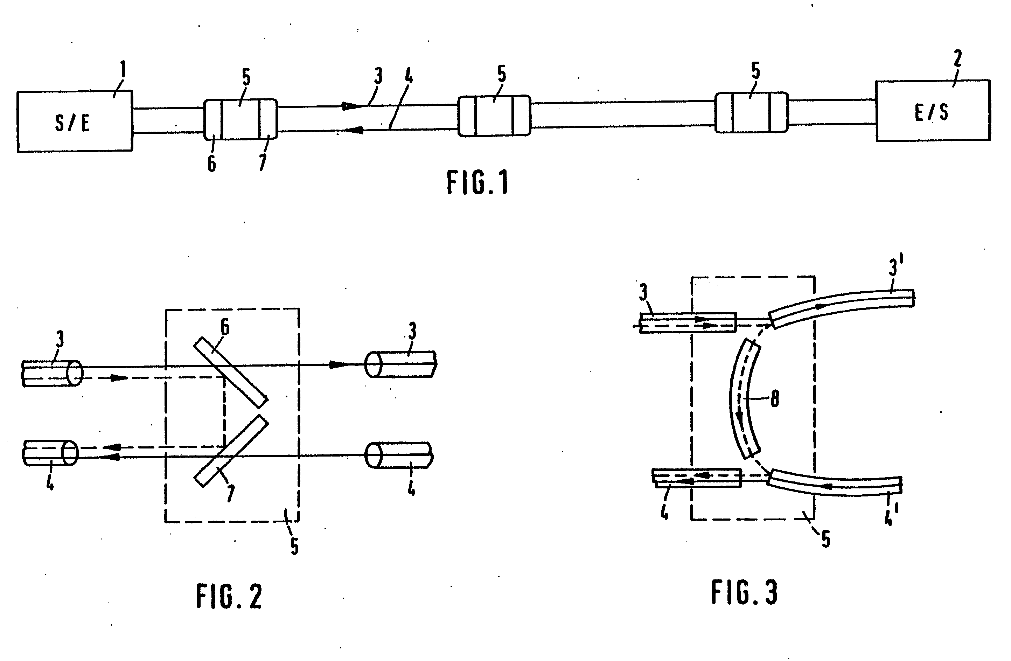

In der Fig. 1 ist eine optische Übertragungsstrecke dargestellt, wobei ein Sende-Empfangsgerät 1 über ein Lichtwellenleiterkabel mit einem Empfangs-Sendegerät 2 verbunden ist. In dem Kabel ist ein Lichtwellenleiter 3 für die Übertragung optischer Signale vom Sende-Empfangsgerät 1 zum Empfangs-Sendegerät 2 und ein zweiter Lichtwellenleiter 4 für die Übertragung optischer Signale in entgegengesetzter Richtung zuständig.

Um eventuell auf der Kabelstrecke auftretende Fehler genauer orten zu können, sind in das Kabel in gewissen Abständen Fehlerortungseinrichtungen 5 eingefügt. Die Lichtwellenleiter der einzelnen Kabelabschnitte sind entweder fest oder lösbar mittels Stecker 6, 7 mit den Fehlerortungseinrichtungen 5 verbunden.

Die Fehlerortungseinrichtungen sind mit wellenlängenselektiven Koppelmitteln ausgestattet. Diese bewirken, daß ein aus einer Übertragungsrichtung kommendes, optisches Signal einer bestimmten Wellenlänge reflektiert und in die entgegengesetzte Übertragungsrichtung umgelenkt wird. Also wird hierdurch ein vom Sende-Empfangsgerät 1 ausgesendetes Signal diesem wieder zugeleitet. Ein Vergleich zwischen dem ausgesendeten Signal und dem wieder empfangenen Signal zeigt dann, ob auf der Kabelstrecke zwischen dem Sende-Empfangsgerät und der Fehlerortungseinrichtung ein Fehler vorliegt. Signale anderer Wellenlängen als die, für welche die Fehlerortungseinrichtung und Reflexion abgestimmt ist, durchlaufen die Koppelemente ungehindert.

Stimmt man alle in eine Kabelstrecke eingesetzten Fehlerortungseinrichtungen auf eine andere Wellenlänge ab, so können die einzelnen Kabelabschnitte nacheinander überprüft und damit ein Fehler sehr genau geortet werden.

Dadurch, daß die Fehlerortungseinrichtungen nur jeweils ein Signal einer ganz bestimmten Wellenlänge reflektieren und Signale anderer Wellenlängen transmittieren, ist es möglich, während des Ortungsvorganges eine Signalübertragung zwischen den Endgeräten der Kabelstrecke aufrechtzuerhalten und zwar auf den Signalwellenlängen, die die Fehlerortungseinrichtungen transmittieren.

Sehr vorteilhaft erweist sich solch eine Fehlerortungseinrichtung auch bei der Installation einer Lichtwellenleiterkabelstrecke. An das Ende eines jeweils verlegten Kabelabschnittes schließt der Monteur eine Fehlerortungseinrichtung an. Von einem Sende-Empfangsgerät am Anfang der Kabelstrecke wird dann ein Prüfsignal ausgesendet, das die Fehlerortungseinrichtung reflektiert. Anschließend wird dem Monteur mitgeteilt, ob der gerade verlegte Kabelabschnitt fehlerfrei ist oder nicht, so daß dieser darauf entsprechende maßnahmen ergreifen kann. Diese Information wirde auf einer Wellenlänge übertragen, die die Fehlerortungseinrichtung transmittiert. Mit einem auf diese Wellenlänge abgestimmten und hinter der Fehlerortungseinrichtung angeschlossenen Empfänger kann der Monteur die Information empfangen.

In der Fig. 2 ist ein Ausführungsbeispiel einer Fehlerortungseinrichtung schematisch dargestellt. Die Koppelmittel dieser Fehlerortungseinrichtung bestehen aus zwei planparallelen Platten 6 und 7 (Interferenzfilter), die Licht einer bestimmten Wellenlänge reflektieren und für alle anderen Wellenlängen durchlässig sind. Dabei ist die eine planparallele Platte 6 in den Übertragungsweg des Lichtwellenleiters 3 und die andere planparallele Platte 7 in den Übertragungsweg des Lichtwellenleiters 4 eingefügt. Die Platten 6 und 7 sind zueinander und zu den Übertragungswegen (durchgezogene Linien) der Lichtwellenleiter 3, 4 so geneigt, daß ein Lichtstrahl (strichliert gezeichnet) einer bestimmten Wellenlänge aus dem Lichtwellenleiter 3 an der ersten Platte 6 reflektiert, von dort zur zweiten Platte 7 umgelenkt, hier wiederum reflektiert und in den Lichtwellenleiter 4 der Gegenrichtung eingekoppelt wird. Lichtstrahlen anderer Wellenlängen in den Lichtwellenleitern 3, 4 (durchgezogene Linien) durchlaufen die planparallelen Platten ungehindert.

Eine andere Ausführung einer Fehlerortungseinrichtung zeigt die Fig. 3. Die Koppelmittel bestehen hier aus wellenlängenselektiven Lichtwellenleiterverzweigungen, wie sie z. B. aus der DE-OS 31 35 312 bekannt sind. Der vom Sende-Empfangsgerät kommende Lichtwellenleiter 3 strahlt mehrere Signale verschiedener Wellenlängen auf die Stirnfläche eines zweiten weiterführenden Lichtwellenleiters 3' ab. Die Stirnfläche des Lichtwellenleiters 3' ist mit einer Schicht versehen, die nur für Strahlen einer ganz bestimmten Wellenlänge (strichlierte Linie) nicht durchlässig ist. Diese Strahlen werden an der Stirnfläche reflektiert und in einen dritten Lichtwellenleiter 8 eingekoppelt, wogegen alle anderen Strahlen (durchgezogene Linie) die Schicht der Stirnfläche durchdringen und sich im Lichtwellenleiter 3' weiter ausbreiten. Mit dem Lichtwellenleiter 8 werden die reflektierten Strahlen zu einer zweiten wellenselektiven Lichtwellenleiterverzweigung übertragen. Dort ist ein Lichtwellenleiter 4' an seiner Stirnfläche ebenfalls mit einer für die vom Lichtwellenleiter 8 übertragenen Strahlen undurchlässigen Schicht versehen. Jene Strahlen werden an der Stirnfläche des Lichtwellenleiters 4' umgelenkt und in den Lichtwellenleiter 4 eingespeist über den sie zum Sende-Empfangsgerät zurückgelangen. Über den Lichtwellenleiter 4' ankommende Strahlen durchdringen die Schicht an der Stirnfläche und werden direkt in den weiterführenden Lichtwellenleiter 4 eingekoppelt.

## Patentansprüche

1. Fehlerortungseinrichtung für eine Lichtwellenleiterkabelstrecke, wobei am Ende eines jeden auf Lichtdurchgang zu überprüfenden Kabelabschnitts eine Vorrichtung vorhanden ist, die ein von einem Sende-Empfangsgerät in einen ersten Lichtwellenleiter des Kabels eingespeistes Signal einer bestimmten dem jeweiligen Kabelabschnitt eindeutig zugeordneten Wellenlänge aus diesem Lichtwellenleiter auskoppelt und es in einen zweiten Lichtwellenleiter einkoppelt, der das Signal an das Sende-Empfangsgerät zurückleitet, dadurch gekennzeichnet, daß am Ende eines jeden Kabelabschnitts im Zuge der beiden Lichtwellenleiter (3, 4) Koppelelemente (6, 7) angeordnet sind, welche Lichtsignale mit der dem jeweiligen Kabelabschnitt zugeordneten Wellenlänge reflektieren und Lichtsignale aller anderen Wellenlängen transmittieren, wobei die am Koppelelement (6) im Zuge des ersten Lichtwellenleiters (3) reflektierten Lichtsignale zum Koppelelement (7) im Zuge des zweiten Lichtwellenleiters geführt, an diesem Koppelelement (7) reflektiert und in den zweiten Lichtwellenleiter (4) eingespeist werden.

2. Fehlerortungseinrichtung nach Anspruch 1, dadurch gekennzeichnet, daß die Koppelmittel aus planparallelen Platten (6, 7) bestehen, die nur Lichtsignale einer bestimmten Wellenlänge reflektieren und für Licht anderer Wellenlängen durchlässig sind und daß die beiden Platten (6, 7) so zueinander und zu den Lichtwellenleitern (3, 4) geneigt sind, daß Licht, welches an der im Zuge des ersten Lichtwellenleiters (3) angeordneten Platte (6) reflektiert wird, zu der im Zuge des zweiten Lichtwellenleiters (4) angeordneten Platte (7) umgelenkt und von dort zum zweiten Lichtwellenleiter (4) hin reflektiert wird.

3. Fehlerortungseinrichtung nach Anspruch 1, dadurch gekennzeichnet, daß die Koppelmittel aus dreiarmigen Lichtwellenleiterverzweigungen (3, 3', 8, 4, 4') bestehen, bei denen die Stirnfläche eines Lichtwellenleiters (3', 4'), worauf die anderen beiden Lichtwellenleiter (3, 8, 4) mit ihren Stirnflächen ausgerichtet sind, mit einer Reflexionsschicht versehen ist, welche nur Lichtsignale einer ganz bestimmten Wellenlänge reflektiert und für Licht anderer Wellenlängen durchlässig ist, und daß ein den beiden Lichtwellenleiterverzweigungen gemeinsamer Lichtwellenleiterarm (8) die optische Verbindung zwischen den beiden Lichtwellenleiterverzweigungen (3, 3', 8, 4, 4') herstellt.

### Claims

1. Fault-locating equipment for a light wave conductor cable path, wherein at the end of each cable portion to be tested for light passage, there is present a device which couples a signal, fed by a transceiving device into a first light wave conductor of the cable and being of a certain wavelength unambiguously associated with the respective cable portion, out of this light wave conductor and couples it into a second light wave conductor which conducts the signal back to to the transceiving device, characterised thereby, that coupling elements (6, 7), which reflect light signals of the wavelength associated with the respective cable portion and transmit light signals of all other wavelengths, are arranged at the end of each cable portion in the course of both the light wave conductors (3, 4), wherein the light signals reflected at the coupling element (6) in the light signals reflected at the coupling element (6) in the course of the first light wave conductor (3) are guided to the coupling element (7) in the course of the second light wave conductor, reflected at this coupling element (7) and fed into the second light wave conductor (4).

2. Fault-locating equipment according to claim 1, characterised thereby, that the coupling means consist of planar parallel plates (6, 7), which reflect only light signals of a certain wavelength and are permeable for light of other wavelengths, and that both the plates (6, 7) are so inclined each to the other and to the light wave conductors (3, 4) that light, which is reflected at the plate (6) arranged in the course of the first light wave conductor (3), is deflected to the plate (7) arranged in the course of the second light wave conductor (4) and reflected from there towards the second light wave conductor (4).

3. Fault-locating equipment according to claim 1, characterised thereby, that the coupling means consist of three-armed light wave conductor branchings (3, 3', 8, 4, 4'), in which the end face of a light wave conductor (3', 4'), onto which both the other light wave conductors (3, 8, 4) are aligned by their end faces, is provided with a reflective layer which reflects only light signals of a quite definite wavelength and is permeable for light of other wavelengths, and that a light wave conductor arm (8) common to both the light wave conductor branchings produces the optical connection between both the light wave conductor branchings (3, 3', 8, 4, 4').

### Revendications

1. Dispositif de localisation de défauts pour une section de câble à guide d'ondes lumineuses (fibre optique), dans lequel, à l'extrémité de chacun des tronçons de câble à examiner au point de vue passage des signaux optiques, est prévu un dispositif qui désaccouple un signal, qu'un appareil émetteur-récepteur envoie dans un premier guide d'ondes lumineuses du câble et dont la longueur d'onde déterminée correspond de façon univoque au tronçon respectif du câble, d'avec ce premier guide d'ondes lumineuses, pour l'en faire sortir, et l'accouple, pour l'y faire entrer, avec un second guide d'ondes lumineuses qui renvoie le signal à l'appareil émetteur-récepteur, dispositif caractérisé en ce qu'à l'extrémité de chacun des tronçons de câble, sur le trajet des deux guides d'ondes lumineuses (3, 4) sont disposés des éléments de couplage (6, 7) qui réfléchissent les signaux optiques de longueur d'onde correspondant au tronçon de câble respectif et transmettent les signaux optiques de toutes les autres longueurs d'ondes, étant précisé que les signaux optiques réfléchis sur l'élément de couplage (6) qui se trouve sur le trajet du premier guide d'ondes lumineuses (3) sont amenés vers l'élément de couplage (7) qui se trouve sur le trajet du second guide d'ondes lumineuses, sont réfléchis sur cet élément de couplage (7) et sont envoyés dans le second guide d'ondes lumineuses (4).

2. Dispositif de localisation de défauts selon la revendication 1, caractérisé en ce que les moyens de couplage sont constitués de plaques parallèles planes (6, 7) qui ne réfléchissent que les signaux optiques d'une longueur d'onde déterminée et sont transparents pour la lumière de toutes les autres longueurs d'ondes ; et en ce que les deux plaques (6, 7) sont inclinées l'une par rapport à l'autre et par rapport aux guides d'ondes lumineuses (3, 4) de façon telle que la lumière qui se réfléchit sur la plaque (6) disposée sur le trajet du premier guide d'ondes lumineuses (3) est déviée en direction de la plaque (7) disposée sur le trajet de second guide d'ondes lumineuses (4) et, de là, se réfléchit en direction du second guide d'ondes lumineuses (4).

3. Dispositif de localisation de défauts, selon la revendication 1, caractérisé en ce que les moyens de couplage sont constitués d'embranchements de guides d'ondes lumineuses à trois bras (3, 3', 8, 4, 4'), dans lesquels la surface frontale d'un guide d'ondes lumineuses (3', 4'), sur laquelle les deux autres guides d'ondes lumineuses (3, 8, 4) sont alignés par leurs surfaces frontales, présente une couche réfléchissante qui ne réfléchit que les signaux optiques d'une longueur d'onde bien déterminée et est transparente pour la lumière des autres longueurs d'ondes ; et en ce qu'un bras formant guide d'ondes lumineuses (8), commun aux deux embranchements de guides d'ondes lumineuses, réalise la liaison optique entre les deux embranchements de guide d'ondes lumineuses (3, 3', 8, 4, 4').

0 111 582

FIG.1

FIG.2

FIG.3